(19) Europäisches Patentamt

European Patent Office

Office européen des brevets

(11) **EP 0 883 472 B1**

(12) **EUROPÄISCHE PATENTSCHRIFT**

(45) Veröffentlichungstag und Bekanntmachung des Hinweises auf die Patenterteilung:
**17.11.1999 Patentblatt 1999/46**

(21) Anmeldenummer: **97906114.0**

(22) Anmeldetag: **24.02.1997**

(51) Int. Cl.$^6$: **B27C 1/00**, B27G 13/00, B23C 5/00

(86) Internationale Anmeldenummer:
**PCT/EP97/00872**

(87) Internationale Veröffentlichungsnummer:
**WO 97/31762 (04.09.1997 Gazette 1997/38)**

(54) **FRÄSWERKZEUG MIT VERMINDERTER LÄRMEMISSION ZUM BEARBEITEN VON HOLZ ODER DERGLEICHEN**

MILLING TOOL WITH REDUCED NOISE EMISSION FOR MACHINING WOOD OR THE LIKE

OUTIL DE FRAISAGE A NIVEAU SONORE REDUIT POUR TRAVAILLER LE BOIS OU DES MATERIAUX SIMILAIRES

(84) Benannte Vertragsstaaten:
**AT BE CH DE DK ES FI FR GB IT LI NL PT SE**

(30) Priorität: **27.02.1996 DE 19607318**

(43) Veröffentlichungstag der Anmeldung:
**16.12.1998 Patentblatt 1998/51**

(73) Patentinhaber:
• **Heisel, Uwe**
**70192 Stuttgart (DE)**
• **Tröger, Johannes, Dr.-Ing.**
**71229 Leonberg (DE)**

(72) Erfinder:
• **Heisel, Uwe**
**70192 Stuttgart (DE)**

• **Tröger, Johannes, Dr.-Ing.**
**71229 Leonberg (DE)**

(74) Vertreter:
**Dreiss, Fuhlendorf, Steimle & Becker**
**Gerokstrasse 6**
**70188 Stuttgart (DE)**

(56) Entgegenhaltungen:
| | |
|---|---|
| DE-A- 3 924 714 | DE-C- 183 159 |
| FR-A- 2 648 385 | FR-A- 2 716 830 |
| GB-A- 963 192 | US-A- 2 781 068 |
| US-A- 3 163 919 | US-A- 4 263 949 |
| US-A- 4 309 132 | |

**Beschreibung**

Die vorliegende Erfindung bezieht sich auf ein Fräswerkzeug zum Bearbeiten von Holz oder ähnlich leicht zerspanbaren Werkstoffen nach dem Oberbegriff des Anspruchs 1.

Dabei werden unter "ähnlich wie Holz leicht zerspanbaren Werkstoffen" bspw. andere Holzwerkstoffe, Kunststoffe oder daraus agglomerierte Werkstoffe verstanden. Insbesondere soll ein derartiges Fräswerkzeug zur Bearbeitung, bspw. Formatieren plattenförmiger Bauteile aus derartigen Werkstoffen dienen.

Hersteller von Holzbearbeitungsmaschinen bemühen sich schon seit Jahrzehnten, den von den Maschinen abgestrahlten Schalleistungspegel zu minimieren bzw. in vertretbaren zulässigen Grenzen zu halten. Obwohl der Schallentstehungsmechanismus wissenschaftlich als aufgeklärt betrachtet werden kann (Tröger, J. : Über den Mechanismus der Schallentstehung beim Spanen -1. Mitteilung: Untersuchung über den Arbeitslärm, Holtechnologie Leipzig 10 (1969) 3, S. 181-184 -2. Mitteilung: Untersuchung über den Leerlauflärm, Holztechnologie Leipzig 10 (1969) 4, S. 265-269 -3. Mitteilung: Theoretische Untersuchungen Teil I, Holztechnologie Leipzig 11 (1970) 1, S. 41-47 -4. Mitteilung: Theoretische Untersuchungen Teil II, Holztechnologie Leipzig 11 (1970) 2, S. 75-80), ist es noch nicht gelungen, die vorgeschriebenen gesetzlichen Forderungen bei der Formatbearbeitung durchgehend zu erfüllen. Die in den letzten Jahren erfolgte Einführung von Diamant als Schneidstoff bei Kreissägewerkzeugen und Kompaktzerspanern erforderte vergrößerte Keilwinkel, wodurch die spezifische Schnittkraft etwa um das Zehnfache wuchs. Damit stieg auch der emittierte Schalleistungspegel, da zwischen Schnittkraft und Lärmemission signifikante Zusammenhänge bestehen. Besonders betroffen sind Formatbearbeitungsmaschinen der Möbelindustrie, wovon es allein in Deutschland schätzungsweise 500 zu Anlagen verkettete Maschinen gibt. Deshalb existiert ein Handlungsbedarf mit dem Ziel, die derzeit zu hohe Lärmbelastung von etwa 90 bis 95 dB AI und darüber hinaus an den betreffenden Arbeitsplätzen deutlich zu senken. Basierend auf den bekannten Mechanismen der Schallentstehung sind neue Prinziplösungen zur Verminderung der emittierten Schalleistung zu suchen. Neben einer verminderten Lärmemission müssen die Werkzeuge mit dieser speziellen Schneidengeometrie auch eine ausgezeichnete Bearbeitungsqualität gewährleisten. Wie jüngste Publikationen in der Fachpresse zeigen, ist die Forderung nach einer hochwertigen Bearbeitungsqualität für Erzeugnisse der holzbe- und -verarbeitenden Industrie noch äußerst aktuell.

Schallquellen bei der Holzbearbeitung sind Werkzeug und Werkstuck. Bestimmend kann sowohl das Leerlaufgeräusch als auch das Geräusch sein, das beim Spanen emittiert wird (Arbeitsgeräusch). Hauptschallquelle im Leerlauf ist das Werkzeug. Das aerodynamische Wirbelgeräusch entsteht infolge sich seitlich der Schneiden alterierend ablösender Luftwirbel. Dieses Geräusch ist gekennzeichnet durch ein breitbandiges Rauschen ohne ausgeprägte tonale Komponenten im Spektrum. Befindet sich ein scharfkantiges Hindernis in der Nähe des Wirbelfeldes, so tritt der sog. "Drehklang" auf, der eine ausgeprägte tonale Komponente besitzt, deren Frequenz gleich dem Produkt aus Schneiden- und Drehzahl ist. Die Erhöhung des Schallleistungspegels mit Verminderung des Abstandes zur Schneide kann dabei bis zu 10 dB betragen. Bei der Deutung des Arbeitsgeräusches ist davon auszugehen, dass Werkzeug und Werkstück meachanisch schwingungsfähige Gebilde sind. Ihre Erregung beim Spanungsvorgang erfolgt durch einen Teil der Zerspankraft. Die Größe der Erregerkraft kann quantitativ nicht vorausberechnet werden, sie ist nach den o.g. wissenschaftlichen Untersuchungen der Schnittkraft proportional. Ebenso ist es nicht möglich, das Werkstück als mechanischen Schwinger exakt zu definieren.

Die Schnittkraft besteht aus einem während des Eingriffes konstanten Reibanteil und einem Anteil, der der momentanen Spandicke proportional ist. Da die Spandicke linear mit der Zeit wächst (Gegenlauf) oder abnimmt (Gleichlauf), ist dieser Anteil dreieckförmig, der Reibkraftanteil ist während des Eingriffes konstant (rechteckförmig). Eine Schwingungserregung von Werkzeug und Werkstück erfolgt sowohl zu Beginn des Schneideneingriffes als auch am Ende der Berführung der Schneide mit dem Werkstuck, also jeweils zu dem Zeitpunkt, in dem die größte Unstetigkeit der Erregerkraft vorliegt.

In der Praxis bereitet derzeit bei der Formatbearbeitung weniger der Leerlauflärm sondern vielmehr der Arbeitslärm Probleme. Die abgestrahlte akustische Leistung ($P_{ak}$) ist der schallabstrahlenden Fläche (A), dem Quadrat des Effektivwertes der Schwinggeschwindigkeit ($v_{eff}$), der Luftdichte ($\rho$), der Schallgeschwindigkeit (c) und dem Abstrahlgrad ($\sigma$) proportional:

$$P_{ak} = \sigma \cdot \rho \cdot c \cdot v_{eff}^{2} \cdot A \qquad (1)$$

Je höher der Effektivwert der Schwinggeschwindigkeit ist, desto größer wird der emittierte Schalleistungspegel und umgekehrt. Selbst wenn es gelingen würde, den Effektivwert der Schwinggeschwindigkeit exakt zu berechnen, bestehen erhebliche Probleme bei der Bestimmung des Abstrahlgrades ($\sigma$) und der abstrahlenden Fläche (A). Die Vorausberechnung der abgestrahlten akustischen Leistung ($P_{ak}$) eines speziellen schwingungsfähigen Systems ist, wenn überhaupt möglich, äußerst schwierig. Trotz dieser Problematik konnte die Wirkung der zerspanungstechnischen Einflussgrößen auf die Schallemission qualitativ nachgewiesen werden. Mittels einer modellhaften Nachbildung des Zerspanungs- und Schwingungsvorganges konnte eine gute Übereinstimmung mit der Realität nachgewiesen werden. Die Simulation der Schwingungvorgänge beim Zerspanen erfolgte in den o.g. wissenschaftlichen Untersuchungen mittels eines passiven Analogrechners, an dem alle interessierenden Parameter wie Art und Anzahl der Auflager, Dämpfungen, Dichte, E-Modul, Federkonstanten und Kräfte (Frequenz, Zeitdauer, Form des Impulses, Tastverhältnis) simuliert wurden. Alle zerspanungstechnischen Einflussgrößen, die bei der Modellierung über die Schnittkraft zu einer Erhöhung des Effektivwertes der Schwinggeschwindigkeit des Modells führen, bewirken auch eine Vergrößerung des Schallpegels. So konnte z.B. der Einfluss des Zeitspanvolumens sowohl beim Schnellepegel des Modells als auch beim tatsächlichen Schallleistungspegel bei log. Teilung des Abszisse als ein linearer Zusammenhang nachgewiesen werden. Dabei ist die Schwinggeschwindigkeit bei der Simulation des Gegenlaufes zu Beginn des Schnittkraftimpulses (geringer Anstieg von dF/dt) erheblich kleiner, als bei dem plötzlichen Austritt der Schneide aus dem Werkstück (großer Anstieg von dF/dt). 1971 wurde in den o.g. wissenschaftlichen Untersuchungen die Behauptung formuliert, dass durch eine Verminderung der Unstetigkeit des zeitlichen Verlaufes der Zerpankraft die Schwinggeschwindigkeit und damit die Lärmmission verkleinert werden kann. Niemeyer, W.-H.: Primäre Lärmminderungsmaßnahme in der Holzbearbeitung: Fräswerkzeuge, Industrie-Anzeiger 110 (1988) Nr. 23, S. 40-41, bestätigte 1988 durch seine Untersuchungen diese Erkenntnis. Entscheidend ist nicht die Größe der Erregerkraft sondern deren Unstetigkeit. Die Erregerkraft des schwingungsfähigen Systems Werkzeug/Werkstück ist dem Anteil der Zerspankraft proportional, die in der Richtung bzw. in den Richtungen wirkt, in der das spezielle System schwingen kann. Für den jeweiligen Fall ist die Berechnung der Erregerkraft schwierig, da über die Größe und Richtung der Zerspankraft nur wenige Untersuchungen vorliegen. Mehr wissenschaftliche Erkenntnis liegen nach Heisel, U.; Tröger, J.; Dietz H.: Am Schneidkeil wirkende Kräfte; Teil (1), Holz- und Kunststoffbearbeitung; HK (1995) 5, S. 604-613; Teil (2), Holz- und Kunststoffbearbeitung; HK (1995) 6, S. 884-888; Teil (3), Holz- und Kunststoffbearbeitung, HK (1995) 7, S. 1000-1004 über die Schnittkraft vor. Man wählte zur Modellierung des Systems als Erregerkraft die Schnittkraft und konnte damit sehr gut die qualitativen Zusammehänge interpretieren, so dass mit Hilfe der Schnittkraft das Verhalten der Erregerkraft erklärt werden kann. Eine aus dem Zerspanungsprozess resultierende Kraft wirkt nur dann, wenn ein Schneidzahn im Eingriff ist.

Ein Kreissägezahn, der bspw. im Gegenlauf arbeitet, trifft nicht mit seiner Schneide sondern mit der Brust (Spanfläche) nahezu schlagartig auf das Werkstück. Es ist verständlich, dass im Moment des Auftreffens der Spanfläche des Schneidkeils kein idealer Zerspanungsvorgang vorliegt. Der Anstieg der Schnittkraft erfolgt beim Kreissägen im Gegenlauf in einem Zeitraum, in dem sich das Werkzeug (bspw. für einen Zahnvorschub $F_z$ = 0,5 mm) um einen Drehwinkel von etwa $\phi$ = 0,2° bewegt. Dies entspricht einer Zeit von etwa $5 \times 10^6$ s. Im Gleichlauf, der bei der Formatbearbeitung hauptsächlich Anwendung findet, trifft die Schneide direkt auf die Werkstuckoberfläche. Dabei ist der Anstieg noch größer, hier setzt die Schnittkraft praktisch sofort ein. Es kommmt darauf an, den Anstieg der Schnittkraft-Zeitfunktion drastisch zu verringern, um eine Lärmminderung zu erreichen.

Aufgabe der vorliegenden Erfindung ist es deshalb, ein Fräswerkzeug zum Bearbeiten von Holz oder ähnlich leicht zerspanbaren Werkstoffen der eingangs genannten Art zu schaffen, mit dem eine Minderung der Schallemission in konstrukiv einfacher Weise erreicht ist.

Zur Lösung dieser Aufgabe sind bei einem Fräswerkzeug zum Bearbeiten von Holz oder ähnlich leicht zerspanbaren Werkstoffen, der eingangs genannten Art die im Anspruch 1 angegebenen Merkmale vorgesehen.

Durch die erfindungsgemäßen Maßnahmen ist eine Verminderung der Lärmemission sowohl durch eine Verringerung der Schwingungsanregung von Werkzeug und Werkstück als auch durch eine differenzierte Schnittaufteilung erreicht. Die Verringerung der Schwingungen von Werkzeug und Werkstück wird durch einen deutlich verkleinerten Anstieg des Zerspankraftimpulses mittels der besonderen Schneidzahngeometrie bewirkt.

Der winklige Verlauf der Nebenschneiden kann gemäß dem Ausführungsbeispiel nach Anspruch 2 erfolgen. Eine bevorzugte Ausführungsform vorliegender Erfindung liegt jedoch dann vor, wenn die Merkmale gemäß Anspruch 3 verwirklicht sind. Auf diese Weise wird eine erhebliche Verminderung der Lärmemission nicht nur durch eine Verringerung der Schwingungsanregung von Werkzeug und Werkstück sondern auch durch eine Schnittaufteilung in einen lärmoptimierten Bereich großen Zeitspanvolumens und einen qualitätsoptimierten Bereich geringen Zeitspanvolumens erreicht.

Der winklige Verlauf der Nebenschneide oder Nebenschneiden kann in vielfältiger Weise verwirklicht sein, wie dies anhand der Merkmale eines der Ansprüche 4, 5 oder 6 verwirklicht ist, wobei im letzteren Falle zweckmäßiger Weise die Merkmale nach Anspruch 7 vorhanden sein können.

Eine weitere vorteilhafte Ausgestaltung eines Fräswerkzeugs mit Schnittaufteilung ergibt sich durch die Merkmale nach Anspruch 8.

Vorteilhafte Ausgestaltungen der genannten Schnittaufteilung am Fräswerkzeug ergeben sich durch die Merkmale eines oder mehrerer der Ansprüche 9 bis 15, wobei in den beiden letzteren Fällen sich durch die betreffende Länge eine deutliche Lärmminderung ergibt.

Konstruktions- und herstellungstechnisch bedingte Vorteile ergeben sich bei Ausgestaltungen nach den Merkmalen eines oder mehrerer der Ansprüche 16 bis 19.

Weitere Einzelheiten der Erfindung der folgenden Beschreibung zu entnehmen, in der die Erfindung anhand der in der Zeichnung dargestellten Ausführungsbeispiele näher beschrieben und erläutert ist. Es zeigen:

Figur 1     in schematischer perspektivischer Vorderansicht ein Fräswerkzeug zum Stirnplanfräsen eines Werkstücks,

Figur 2A     eine teilweise abgeschnittene perspektivische Rückansicht des mit der äußeren Schneidzahnreihe versehenen einen Werkzeugteils des Fräswerkzeugs nach Figur 1,

Figur 2B     eine teilweise abgebrochene Rückansicht des mit der inneren Schneidzahnreihe versehenen anderen Werkzeugteils des Fräswerkzeugs nach Figur 1,

Figur 3A     einen Schnitt längs der Linie III-III der Figur 1,

Figur 3B     einen der Figur 3A entsprechenden Schnitt, jedoch gemäß einer Variante,

Figuren 4A, B     Stirnplanfräszähne in Vorder- bzw. Seitenansicht eines Fräswerkzeugs gemäß einem anderen Ausführungsbeispiel vorliegender Erfindung,

Figur 5     eine graphische Darstellung der Schnittkraft über dem Eingriffswinkel im Vergleich von einem Fräswerkzeug mit erfindungsgemäßer und herkömmlicher Schneidzahngeometrie,

Figuren 6A, B     Stirnplanfräszähne in Vorder- bzw. Seitenansicht eines Fräswerkzeugs gemäß einem weiteren Ausführungsbeispiel vorliegender Erfindung,

Figuren 7A, 7B     in schematischer Vorderansicht bzw. Schnitt die Aufteilung des Zerspanungsquerschnittes in einen großen Zerspanungsquerschnitt im Werkstück für lärmoptimierte Vorfrässchneidzähne und qualitätsoptimierte Fertigfrässchneidzähne mit einem kleinen Zerspanungsquerschnitt mit einem Fräswerkzeug ähnlich dem der Figuren 1 bis 3 und

Figuren 8A, 8B     in Vorderansicht und teilweiser Seitenansicht eine Anordnung von Fräswerkzeugen gemäß vorliegender Erfindung beim Formatieren mittels Stirnplanfräsen.

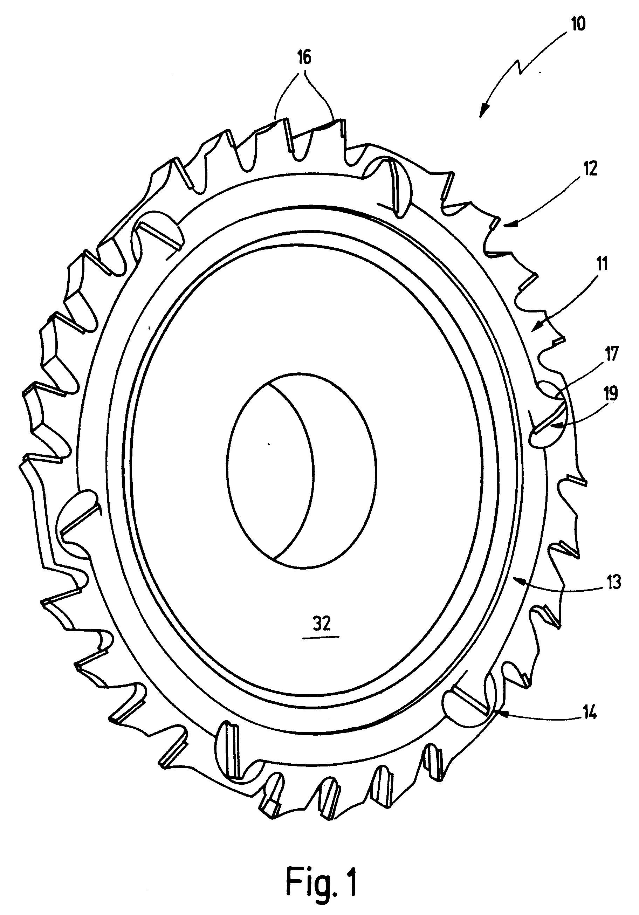

Das in den Figuren 1 bis 3 gemäß einem bevorzugten Ausführungsbeispiel vorliegender Erfindung dargestellte Fräswerkzeug 10 dient zum Bearbeiten von Holz oder ähnlich leicht zerspanbaren Werkstoffen, wie Holzwerkstoffen, Kunststoffen, Schichtwerkstoffen aus Holz und Kunststoff u.dgl., und hierbei insbesondere zum Formatieren von plattenförmigen Bauteilen.

Das Fräswerkzeug 10 besteht aus einem ersten Werkzeugteil 11 mit einer radial äußeren Schneidzahnreihe 12 und einem zweiten Werkzeugteil 13 mit einer radial inneren Schneidzahnreihe 14. Die beiden Werkzeugteile 11 und 12 sind drehfest miteinander verbunden. Beim dargestellten Ausführungsbeispiel besitzt die radial äußere Schneidzahnreihe 12 über den Außenumfang des ersten Werkzeugteils 11 wesentlich mehr, bspw. viermal mehr Schneidzähne 16 als Schneidzähne 17 an der radial inneren Schneidzahnreihe 14 über den Außenumfang des zweiten Werkzeugteils 13 vorhanden sind. Dabei stellen die Schneidzähne 16 am ersten Werkzeugteil 11 die sogenannten Vorfräszähne und die Schneidzähne 17 am zweiten Werkzeugteil 13 die sogenannten Fertigfräszähne dar.

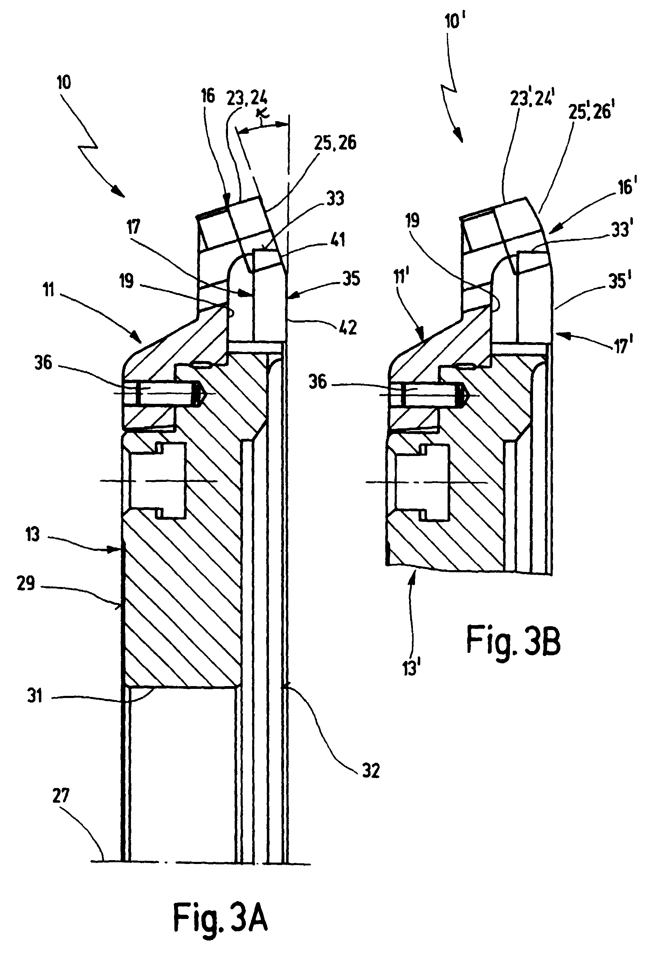

Am ersten Werkzeugteil 11 sind die Schneidzähne 16 der radial äußeren Schneidzahnreihe 12 längs des Umfanges satzweise, bspw. vier Schneidzähne 16 pro Satz angeordnet, wobei zwischen jedem Satz 18 eine Lücke 19 vorhanden ist. Die umfangsseitig hintereinander angeordneten Schneidzähne 16 sind abwechselnd mit unterschiedlichen Schneidzahnplättchen 21 bzw. 22 bestückt. Die Schneidzahnplättchen 21, 22 bilden eine umfangsseitig radial wirkende Hauptschneide 23 bzw. 24 und eine umfangsseitig axial wirkende Nebenschneide 25 bzw. 26. Während beim Schneidzahnplättchen 21 eine schmale Hauptschneide 23 und eine lange Nebenschneide 25 vorgesehen ist, besitzt das Schneidzahnplättchen 22 eine breite Hauptschneide 24 und eine kurze Nebenschneide 26. Dabei nimmt die breite Hauptschneide 24 etwa die gesamte Breite des Schneidzahns 16 ein, während die lange Nebenschneide 25 etwa die gesamte Höhe des Schneidzahns 16 einnimmt. Die Schneidzahnplättchen 21, 22 sind in üblicher Weise am Schneidzahnkörper befestigt, bspw. angeklebt. Der erste Werkzeugteil 11 ist kreisringförmig ausgebildet und besitzt in axialer Richtung einen radial nach innen gestuften Querschnitt, wie sich aus Figur 3 ergibt.

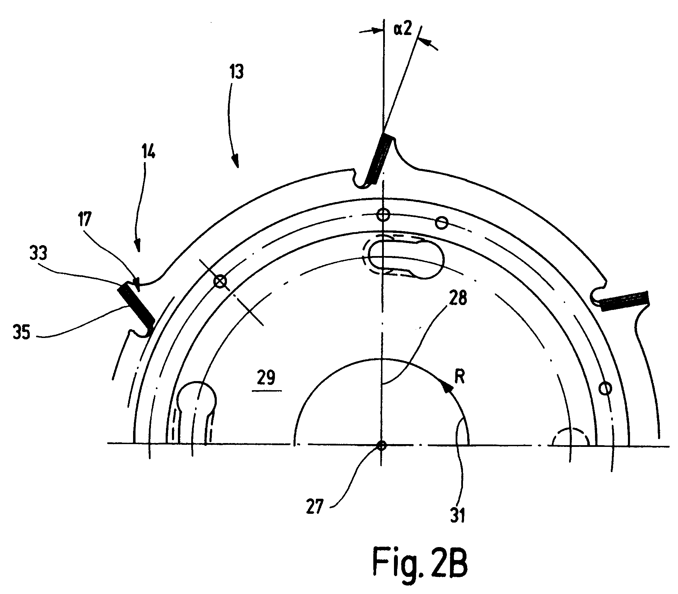

Gemäß Figur 2B ist der zweite Werkzeugteil 13 scheibenartig ausgebildet und besitzt eine mittige axiale Bohrung 31 zum Aufstecken des Fräswerkzeugs 10 auf eine nicht dargestellte Antriebswelle. Über den Außenumfang des zweiten Werkzeugteils 13 gleichmäßig verteilt sind die Schneidzähne 17 angeordnet, die in zusammengebautem Zustand der beiden Werkzeugteile 11 und 13 in den Lücken 19 des ersten Werkzeugteils 11 aufgenommen sind. Dabei ist jede Lücke 19 als von der Vorder- bzw. Bearbeitungsseite 32 ausgehende Vertiefung ausgebildet. Im Querschnitt nach Figur 3 gesehen ist der scheibenförmige zweite Werkzeugteil 13 außenumfangsseitig gestuft ausgebildet, derart, dass der erste Werkseugteil 11 über die Rückseite 29 des zweiten Werkzeugteils 13 axial gebracht und mittels Stiften 36 und/oder Schrauben drehfest verbunden ist. Die Schneidzähne 17 der radial inneren Schneidzahnreihe 14 am zweiten Werkzeugteil 13 besitzen eine umfangsseitig radial wirkende Hauptschneide 33 und eine umfangsseitig axial wirkende Nebenschneide 35.

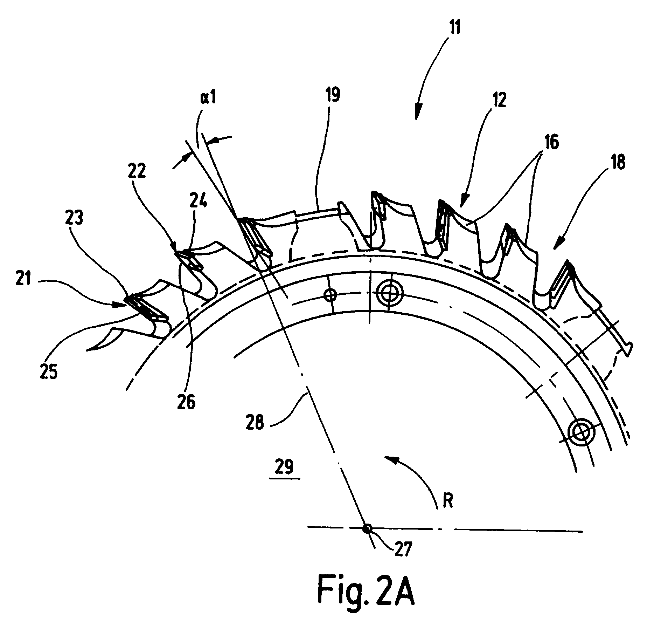

Wie insbesondere aus den Figuren 2A und 2B ersichtlich ist, besitzen die Nebenschneiden 25 und 26 bzw. 35 der Schneidzähne 16 bzw. 17 einen unterschiedlichen Winkel $\alpha 1$ bzw. $\alpha 2$ zu einem von der Rotationsachse 27 ausgehenden Radiusstrahl 28 in der Bearbeitungs- bzw. Arbeitsebene 32. Während die Nebenschneide 25 bzw. 26 der Schneidzähne 16 am ersten Werkzeugteil 11 gegenüber dem gedachten Radiusstrahl 28 einen positiven Neigungswinkel $\alpha 1$ aufweist, ist die Nebenschneide 35 der Schneidzähne 17 am zweiten Werkzeugteil 13 unter einem negativen Neigungswinkel $\alpha 2$ zum Radiusstrahl 28 angeordnet. Mit anderen Worten, die Nebenschneiden 25 und 26 sind gegenüber dem Radiusstrahl 28 in Rotationsrichtung R vorlaufend und die Nebenschneiden 35 gegenüber dem Radiusstrahl nachlaufend angeordnet.

Gemäß der zusammengebauten Schnittdarstellung der Figur 3A sind die Nebenschneiden 25 und 26 der radial äußeren Schneidzahnreihe 12 am ersten Werkzeugteil 11 unter einem bestimmten Neigung- bzw. Einstellwinkel $\kappa$ zur Arbeitsebene 32, die senkrecht zur Rotationsachse 27 liegt, angeordnet. Dabei liegen die Nebenschneiden 25 und 26 der einzelnen Schneidzähne 16 umfangsseitig gesehen in einer Flucht hintereinander. Die Nebenschneide 35 der Schneidzähne 17 der radial inneren Schneidzahnreihe 14 am zweiten Werkzeugteil 13 besitzt zwei Schneidenabschnitte 41 und 42, von denen der radial innere Abschnitt 42 parallel zur Arbeitsebene 32 liegt, während der radial äußere Abschnitt 41 ebenfalls unter dem Winkel $\kappa$ zur Arbeitsebene 32 angeordnet und dabei umfangsseitig in Flucht mit den Nebenschneiden 25 und 26 liegt. Mit anderen Worten, die Nebenschneiden 25, 26 und 35 sind derart angeordnet, dass sie von radial außen nach radial innen einen in zwei Stufen abnehmbaren Einstellwinkel ($\kappa$ = spitzwinklig und $\kappa$ = 0) gegenüber der Arbeitsebene 32 besitzen.

Bei einer in Figur 3B dargestellten Variante ist der von radial außen nach radial innen abnehmende Einstellwinkel an den Nebenschneiden 25, 26 bzw. 35 derart ausgebildet, dass die Nebenschneiden facettenartig gestaltet, also mit in mehreren Abschnitten bis $\kappa$ = 0 abnehmenden Einstellwinkeln $\kappa$ gegenüber der Arbeitsebene 32 vesehen sind. Es versteht sich, dass dies auch in der Weise erfolgen kann, dass der Verlauf der sich aneinander reihenden Nebenschneiden 25, 26 und 35 nicht facettenartig sondern ballig ist.

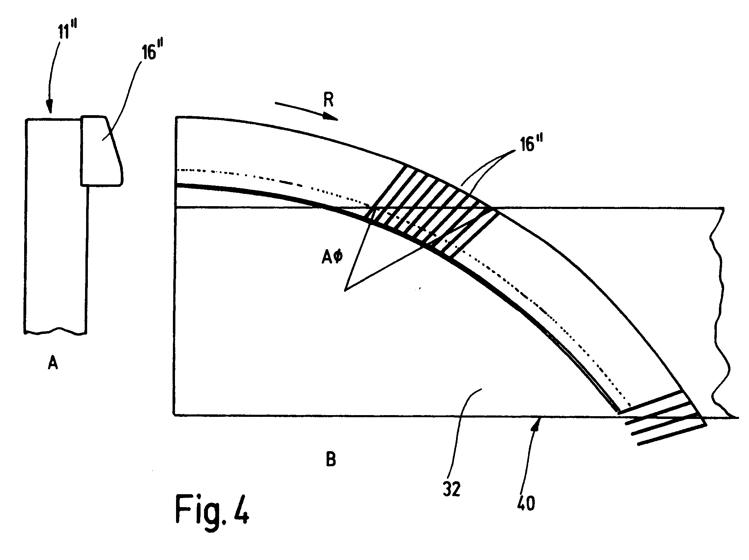

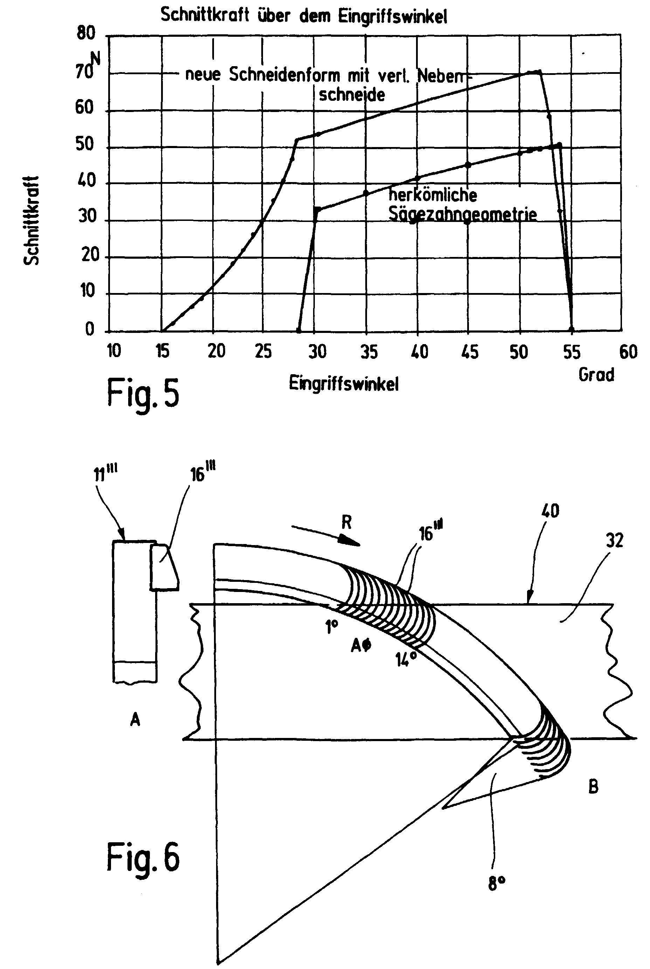

Während beim Fräswerkzeug 10 nach den Figuren 1 bis 3 sich der winklige Verlauf der Nebenschneiden als Kombination des winkligen Verlaufs einer Nebenschneide 25 bzw. 26 einer radial äußeren Schneidzahnreihe 12 und einer in Rotationsrichtung folgenden Nebenschneide 35 einer radial inneren Schneidzahnreihe 14 darstellt, ist es auch möglich, diesen von radial außen nach radial innen stetig oder abschnittsweise abnehmenden Einstellwinkel an einer einzigen Nebenschneide 25, 26 einer einzigen Schneidzahnreihe 12 an einem einzigen Werkzeugteil 11" bzw. 11"' vorzusehen, wie sich dies bspw. aus den Figuren 4 und 6 ergibt. Dabei liegen gemäß Figur 4 die Schneidzähne 16" parallel zur bzw. in der Arbeitsebene 32, während die Schneidzähne 16"' und damit die Nebenschneiden gemäß Figur 6 gegenüber der Arbeitsebene 32 gewölbt bzw. ballig verlaufen.

Über einen variablen Einstellwinkel $\kappa$ und eine veränderliche Spanungsbreite b, ist eine zielgerichtete Gestaltung der Schnittkraft-Zeitfunktion möglich. Für unterschiedliche Eingriffswinkel müssen Spanungsbreite und Einstellwinkel $\kappa$ verschiedene geeignete Werte besitzen, um den Anstieg der Schnittkraft-Zeitfunktion zu verringern. Dies erfolgt durch eine deutliche Verlängerung des Zahnes und einem über der im Eingriff befindlichen Länge der Planschneide des Zahnes veränderlichen Einstellwinkel $\kappa$ in Verbindung mit einer in Abhängigkeit vom Eingriffwinkel unterschiedlichen Spanungsbreite. Wie die Schnittkraft-Zeitfunktion im Vergleich zu einer herkömmlichen Sägezahn- bzw. einer herkömmlichen Stirnplanfräszahngeometrie verändert werden kann, ist an den weiteren Beispielen erklärt. Gemäß Figur 4A, B beginnt bei einer derartigen Stirnplanfräsgeometrie der Schnittvorgang mit dem Eingriff der Planschneide. Bevor die volle Planschneidenlänge im Eingriff ist, bewegt sie sich um eine Eingriffswinkeldifferenz von $A_\phi$ = 8°. In der zuzuordnenden Zeit baut sich die Schnittkraft auf. Bei einer herkömmlichen Sägezahngeometrie hingegen erfolgt der Aufbau der Schnittkraft, bspw. bei einem Zahnvorschub von $f_z$ = 0,5 mm in einem Eingriffswinkelbereich von $A_\phi$ = 0,2°. Der Anstieg der Schnittkraft $dF_C/dt$ ist demzufolge etwa vierzigfach höher. Der Schneidezahn besitzt im gewählten Beispiel eine Länge von 20 mm und verjüngt sich nach oben bis auf eine Breite von 4 mm. Er besitzt drei aktive Einzelschneiden mit den Einstellwinkeln

$\kappa$ = 90° (Hauptschneidenlänge 4 mm);
$\kappa$ = 5° (Nebenschneidenlänge 16,5 mm) und
$\kappa$ = 0° (Nebenschneidenlänge 3 mm).

Seine maximale Breite beträgt 10 mm, die Bearbeitungszugabe 4 mm. Die Umfangsschneide, d.h. die Hauptschneide mit $\kappa = 90°$ kommt nicht zum Eingriff. Der Zahnvorschub ($f_z$) soll $f_z = 1$ mm betragen. Bearbeitet wird ein Werkstück 40 der Dicke (d) d = 50 mm mit einem Werkzeug 11" eines Durchmessers von D = 300 mm, bei einem Überstand (ü) von ü = 20 mm. Die Schnittgeschwindigkeit ($v_c$) soll etwa 40m/s betragen, der Werkstoff sei Spanplatte ($k_c = 13,8 + 1,45/h_m$). Die im Eingriff befindliche Schneidenlänge (b), entsprechend der jeweiligen im Abstand von 1° gestuften Winkelstellung, ist Figur 4 B zu entnehmen.

Im Diagramm (Figur 5) ist die erreichte zeitliche Verzögerung des Schnittkraftimpulses durch eine Verlängerung der Nebenschneide durch unterschiedliche Einstellwinkel dargestellt.

Während bei einer Zahngeometrie mit verlängerter Nebenschneide die Eingriffslänge innerhalb eines Drehwinkelbereiches von etwa 8° ihren maximalen Wert erreicht, erfolgt dies beim Kreissägen im Gegenlauf schon in einem Drehwinkelbereich von 0,2°, im Gleichlauf praktisch innerhalb einer unendlich kleinen Zeit. Durch die spezielle Schneidengeometrie ist es möglich, den Verlauf der Schnittkraft über der Zeit so zu beeinflussen, dass durch einen flachen Anstieg und Abfall eine Schwingungs- und damit auch eine deutliche Lärmminderung erzielt werden kann. Nach Figur 5 ist der Abfall der Schnittkraft nicht so stark beeinflussbar wie der Anstieg.

Gestaltet man jedoch die Schneidelemente 16''' gegenüber der Arbeitsebene 32 kreisförmig, gebogen oder spiralförmig, so kann, wie Figur 6A, B zeigt, sowohl Anstieg als auch Abfall der Schnittkraft weiter zeitlich verzögert werden: In Figur 6A, B sind gekrümmte Schneidelemente 16''' vom Beginn des Schneidvorganges in Stufungen von jeweils einem Grad eingezeichnet. Der Anstieg der Schnittkraft wird hier im Vergleich zu Figur 4A, B auf einen Eingriffswinkelbereich $A\phi$ von 8° auf 14° und der Abfall von etwa 2° auf 8° ausgedehnt.

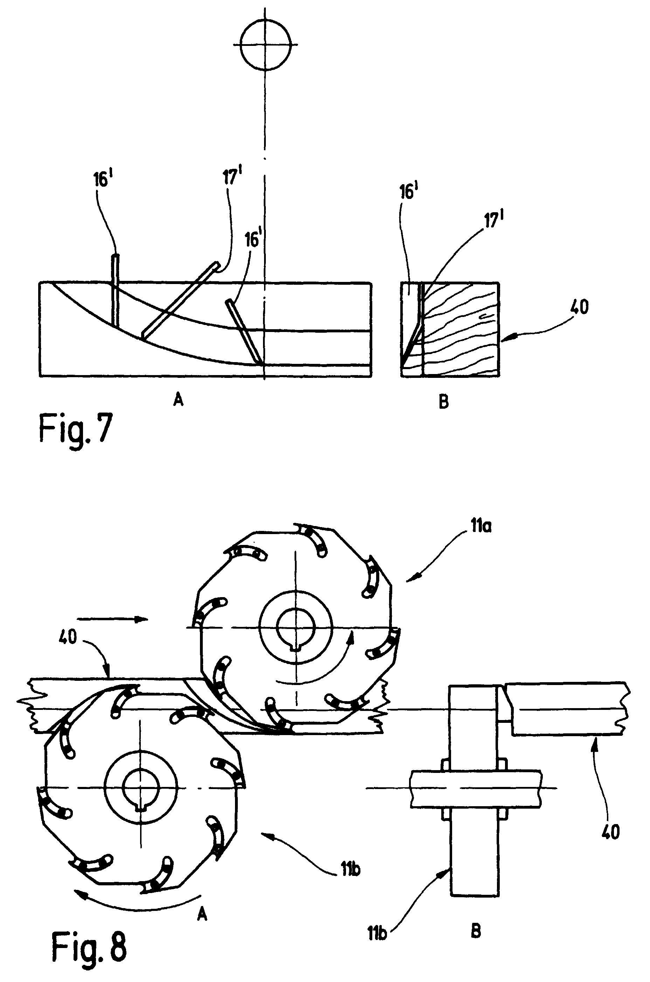

Wie erwähnt ist ein weiterer lärmmindernder Effekt erreichbar, wenn gemäß dem ersten Ausführungsbeispiel der Figuren 1 bis 3 Zwei oder mehrere in ihrer Arbeitsebene versetzte Schneidzahnreihen 12, 14 verwendet werden und dadurch eine Schnittaufteilung erfolgt (Figur 7). Dabei wird der größte Teil des Spanvolumens am Werkstück 40 mittels einer lärmoptimierten Schneidzahngeometrie (Vorfräszähne 16') und nur ein geringer Bruchteil für die endgültige Bildung der Bearbeitungsqualität mittels einer qualitätsoptimierten Schneidzahngeometrie (Fertigfräszähne 17') abgetragen. Dabei müssen diese Vorfräszähne 16' nur eine hinreichende Bearbeitungsqualität erzeugen. Die Lärmemission hängt vom Zeitspanvolumen ab, d.h. je geringer die Bearbeitungszugabe ist, desto weniger Lärm wird emittiert. Mit einer Halbierung des Zeitspanvolumens sinkt der Lärmpegel um etwa 3 dB. Bei einem Pegelabstand von 6 dB (also bei einem Viertel des in der Zeiteinheit zerspanten Volumens) bestimmt die lauteste Schallquelle, im speziellen Fall die lärmoptimierten Vorfräszähne 16', den Gesamtschalldruckpegel. Die Schneidzahnreihe, die mit ihren Fertigfräszähnen 17' die endgültige Bearbeitungsqualität erzeugt, zerspant nur ein geringes Zeitspanvolumen und verursacht somit einen zu vernachlässigenden Schalldruckpegel.

Beim Formatieren mittels Stirnplanfräsen wird mit zwei gegenüberliegenden Werkzeugen 11a und 11b im Gleichlauf gearbeitet (Figur 8). Der Span wird von seiner stärksten Seite angeschnitten, d.h. der Schnittkraft-Zeitverlauf entspricht dem Gleichlauf. Die größte Unstetigkeit liegt im Gleichlauf zu Beginn des Schnittvorganges vor. Mit geringer werdender Spandicke nimmt auch die Schnittkraft ab und am Ende des Schnittvorganges ist die aus der Erregerkraft resultierende Unstetigkeit wesentlich kleiner Beim Formatieren mittels Stirnplanfräsen im Gleichlauf kommt es demzufolge hauptsächlich darauf an, den Anstieg der Erregerkraft zum Schnittbeginn zu verringern.

**Patentansprüche**

1. Fräswerkzeug (10) zum Bearbeiten von Holz oder ähnlich zerspanbaren Werkstoffen, mit mindestens einer umfangseitigen Schneidzahnreihe (12) zum Vorfräsen und einer stirnseitigen Zahnreihe (14) zum Fertigfräsen, wobei die Zähne (16, 17) beider Reihen radial schneidende Schneiden (23, 24, 33) und axial schneidende Nebenschneiden (25, 26, 35) aufweisen, **dadurch gekennzeichnet,** dass die Rotationsflächen der Nebenschneiden beider Zahnreihen ineinanderübergehen und dass die kombinierte Rotationsfläche gegenüber der senkrecht zur Rotationsachse (32) liegenden Arbeitsebene Einstellwinkel (k) bildet, die von radial außen nach radial innen stetig oder abschnittsweise abnehmen.

2. Fräswerkzeug nach Anspruch 1, dadurch gekennzeichnet, dass der winklige Verlauf der Nebenschneide oder - schneiden (25, 26; 35) eine ballige Form ergibt.

3. Fräswerkzeug nach Anspruch 1, dadurch gekennzeichnet, dass der winklige Verlauf der Nebenschneide oder - schneiden (25, 26; 35) eine facettenartige Form ergibt.

4. Fräswerkzeug nach Anspruch 1, dadurch gekennzeichnet, dass der winklige Verlauf der Nebenschneide oder - schneiden (25, 26; 35) durch einen ersten linearen geneigten Abschnitt und einen zweiten linearen zur Arbeitsebene (32) parallelen Abschnitt gebildet ist.

5. Fräswerkzeug nach den Ansprüchen 1 und 4, dadurch gekennzeichnet, dass der erste lineare geneigte Abschnitt an der Nebenschneide (25, 26) der radial äußeren Schneidzahnreihe (12) und an der (35) der radial inneren Schneidzahnreihe (14) und der zweite lineare parallele Abschnitt an der Nebenschneide (35) der radial inneren Schneidzahnreihe (14) gebildet ist.

6. Fräswerkzeug nach mindestens einem der Ansprüche 1 bis 5, dadurch gekennzeichnet, dass gegenüber einem Radiusstrahl (28) in seiner Arbeitsebene (32) die Nebenschneide (25, 26) der radial äußeren Schneidzahnreihe (12) einen positiven Neigungswinkel ($\alpha$1) und die Nebenschneide (35) der radial inneren Schneidzahnreihe (14) einen negativen Neigungswinkel ($\alpha$2) in Umlaufrichtung (R) besitzt.

7. Fräswerkzeug nach mindestens einem der Ansprüche 1 bis 6, dadurch gekennzeichnet, dass die radial äußere Schneidzahnreihe (12) mit Vorfräszähnen (16) und die radial innere Schneidzahnreihe (14) mit Fertigfräszähnen (17) versehen ist, wobei der größere Teil des Zeitspanvolumens mittels der radial äußeren Schneidzahnreihe (12) und der kleinere Teil des Zeitspanvolumens mittels der radial inneren Schneidzahnreihe (14) abtragbar ist.

8. Fräswerkzeug nach mindestens einem der Ansprüche 1 oder 7, dadurch gekennzeichnet, dass die radial äußere Schneidzahnreihe (12) mit der zwei- bis fünffachen, vorzugsweise vierfachen Anzahl von Schneidzähnen (16) gegenüber der Anzahl der Schneidzähne (17) der radial inneren Schneidzahnreihe (14) versehen ist.

9. Fräswerkzeug nach mindestens einem der vorhergehenden Ansprüche 1, 4 bis 8, dadurch gekennzeichnet, dass die Nebenschneiden (25, 26; 35) in Abschnitte unterschiedlichen Einstellwinkels ($\kappa$) gestuft sind.

10. Fräswerkzeug nach mindestens einem der vorhergehenden Ansprüche, dadurch gekennzeichnet, dass die Nebenschneiden (25, 26; 35) gegenüber der Arbeitsebene (32) gewölbt ausgebildet sind.

11. Fräswerkzeug nach Anspruch 9 oder 10, dadurch gekennzeichnet, dass die Stufungen des Einstellwinkels ($\kappa$) kontinuierlich oder diskontinuierlich erfolgt.

12. Fräswerkzeug nach mindestens einem der vorhergehenden Ansprüche, dadurch gekennzeichnet, dass die gestreckte Länge der Nebenschneidenlänge (25, 26; 35) mindestens der zweieinhalbfachen gesamten Bearbeitungszugabe entspricht.

13. Fräswerkzeug nach mindestens einem der Ansprüche 1 bis 12, dadurch gekennzeichnet, dass ein erstes Werkzeugteil (11) mit der radial äußeren Schneidzahnreihe (12) und ein zweites Werkzeugteil (13) mit der radial inneren Schneidzahnreihe (14) vorgesehen ist und dass die beiden Werkzeugteile (11, 13) axial ineinander legbar und drehfest miteinander verbindbar sind.

14. Fräswerkzeug nach Anspruch 13, dadurch gekennzeichnet, dass der erste Werkzeugteil (11) kranzartig ausgebildet ist.

15. Fräswerkzeug nach Anspruch 13 oder 14, dadurch gekennzeichnet, dass am ersten Werkzeugteil (11) zwischen in Umfangsrichtung benachbarten Sätzen von Schneidzähnen (16) Freisparungen (19) zur Aufnahme eines Schneidzahnes (17) der am zweiten Werkzeugteil (13) angeordneten radialen inneren Schneidzahnreihe (14) vorgesehen sind.

16. Fräswerkzeug nach mindestens einem der vorhergehenden Ansprüche, dadurch gekennzeichnet, dass die Schneidzähne (16) der radial äußeren Schneidzahnreihe (12) abwechselnd mit einer breiteren und einer schmaleren Hauptschneide (23, 24) und/oder einer kürzeren und einer längeren Nebenschneide (26, 25) versehen sind.

## Claims

1. A milling tool (10) for processing wood or similar machined materials, with at least one cutter teeth row (12) on the circumferential side for pre-milling and a row of teeth (14) at the front for finishing milling, wherein the teeth (16, 17) of both rows have radially cutting cutting edges (23, 24, 33) and axially cutting minor cutting edges (25, 26, 35), characterized in that the rotatory surfaces of the minor cutting edges of both rows of teeth make a transition into each other, and that the combined rotatory surface forms setting angles (k), which are reduced continuously or in sections from radially outward to radially inward in respect to the working level (32), which extends perpendicularly to the axis of rotation (27).

2. The milling tool in accordance with claim 1, characterized in that the angled course of the minor cutting edge or edges (25, 26; 35) results in a crowned shape.

3. The milling tool in accordance with claim 1, characterized in that the angled course of the minor cutting edge or edges (25, 26; 35) results in a bevel-like shape.

4. The milling tool in accordance with claim 1, characterized in that the angled course of the minor cutting edge or edges (25, 26; 35) is created by a first linear inclined segment and a second linear segment, which is parallel with the working plane (32).

5. The milling tool in accordance with claims 1 and 4, characterized in that the first linear inclined segment is formed on the minor cutting edge (25, 26) of the radially outer cutter teeth row (12) and on the (35) of the radially inner cutter teeth row (14), and the second linear parallel section on the minor cutting edge (35) of the radially inner cutter teeth row (14).

6. The milling tool in accordance with at least one of claims 1 to 5, characterized in that , in respect to an unlimited radial line (28) in its working plane (32), the minor cutting edge (25, 26) of the radially outer cutter teeth row (12) has a positive inclination angle ($\alpha$1), and the minor cutting edge (35) of the radially inner cutter teeth row (14) has a negative inclination angle ($\alpha$2) in the direction of rotation (R).

7. The milling tool in accordance with at least one of claims 1 to 6, characterized in that the radially outer cutter teeth row (12) is equipped with pre-milling teeth (16), and the radially inner cutter teeth row (14) with finishing milling teeth (17), wherein the larger portion of the rate of chip removal is provided by means of the radially outer cutter teeth row (12), and the smaller portion of the rate of chip removal by means of the radially inner cutter teeth row (14).

8. The milling tool in accordance with at least one of claims 1 or 7, characterized in that the radially outer cutter teeth row (12) is provided with two to five times, preferably four times, the number of cutter teeth (16), compared with the number of cutter teeth (17) of the radially inner cutter teeth row (14).

9. The milling tool in accordance with at least one of preceding claims 1, 4 to 8, characterized in that the minor cutting edges (25, 26; 35) are stepped in sections with different setting angles (kappa).

10. The milling tool in accordance with at least one of the preceding claims, characterized in that the minor cutting edges (25, 26; 35) are designed to be arched in respect to the working plane (32).

11. The milling tool in accordance with claim 9 or 10, characterized in that the stepping of the setting angle (kappa) takes place continuously or discontinuously.

12. The milling tool in accordance with at least one of the preceding claims, characterized in that the extended length of the minor cutting edge length (25, 26; 35) corresponds at least to two and a half times the entire working addition.

13. The milling tool in accordance with at least one of claims 1 to 12, characterized in that a first tool element (11) with the radially outer cutter teeth row (12), and a second tool element (13) with the radially inner cutter teeth row (14) is provided, and that the two tool elements (11, 13) can be placed axially against each other and can be connected in a manner fixed against relative rotation.

14. The milling tool in accordance with claim 13, characterized in that the first tool element (11) is designed to be collar-like.

15. The milling tool in accordance with claim 13 or 14, characterized in that between sets of cutter teeth (16) of the first tool element (11), which adjoin each other in the circumferential direction, free gaps (19) have been provided for receiving a cutter tooth (17) of the radially inner cutter tooth row (14) arranged on the second tool element (13).

16. The milling tool in accordance with at least one of the preceding claims, characterized in that the cutter teeth (16) of the radially outer cutter teeth row (12) are alternatingly provided with a wider and a narrower major cutting edge (23, 24) and/or a shorter and longer minor cutting edge (26, 25).

**Revendications**

1. Outil de fraisage (10) pour travailler du bois ou des matériaux usinables similaires, avec au moins une rangée périphérale (12) de dents coupantes pour un fraisage de dégrossissage et une rangée frontale (14) de dents pour le fraisage de finition, les dents (16, 17) des deux rangées présentant des tranchants (23, 24, 33) de coupe radiale et des arêtes de coupe secondaires (25, 26, 35) axiales, **caractérisé en ce que** les surfaces de rotation des arêtes de coupe secondaires des deux rangées de dents s'enchaînent l'une à l'autre et que la surface de rotation combinée forme des angles de directions d'arêtes ($\kappa$) par rapport au plan de travail perpendiculaire à l'axe de rotation (32), qui, en direction radiale, de l'extérieur vers l'intérieur, diminuent continûment ou par segments.

2. Outil de fraisage selon la revendication 1, caractérisé en ce que le profil d'angle de la ou des arête(s) de coupe secondaire(s) (25, 26; 35) produit une forme convexe.

3. Outil de fraisage selon la revendication 1, caractérisé en ce que le profil d'angle de la ou des arête(s) de coupe secondaire(s) (25, 26; 35) produit une forme à facettes.

**4.** Outil de fraisage selon la revendication 1, caractérisé en ce que le profil d'angle de la ou des arête(s) de coupe secondaire(s) (25, 26; 35) est formé d'un premier segment linéaire incliné et d'un deuxième segment linéaire parallèle au plan de travail (32).

**5.** Outil de fraisage selon les revendications 1 et 4, caractérisé en ce que le premier segment linéaire incliné est agencé à l'arête de coupe secondaire (25, 26) de la rangée extérieure radiale de dents coupantes (12) et à celle (35) de la rangée radiale intérieure (14) de dents coupantes et en ce que le deuxième segment linéaire parallèle est agencé à l'arête de coupe secondaire (35) de la rangée de dents coupantes radiale intérieure (14).

**6.** Outil de fraisage selon l'une au moins des revendications 1 à 5, caractérisé en ce que l'arête de coupe secondaire (25, 26) de la rangée radiale extérieure de dents coupantes (12) présente un angle d'inclinaison positif ($\alpha 1$) et l'arête de coupe secondaire (35) de la rangée radiale intérieure de dents coupantes (14) un angle d'inclinaison negatif ($\alpha 2$) dans le sens de rotation (R), par rapport à un axe radial (28) dans son plan de travail (32).

**7.** Outil de fraisage selon l'une au moins des revendications 1 à 6, caractérisé en ce que la rangée de dents coupantes radiale extérieure (12) est munie de dents de fraisage de dégrossisage (16) et la rangée de dents coupantes radiale intérieure (14) de dents de fraisage de finition (17), et en ce que la majeure partie du taux d'enlèvement de copeaux est dû à la rangée de dents coupantes radiale extérieure (12) et que la plus petite partie du taux d'enlèvement de copeaux est dû à la rangée des dents coupantes radiale intérieure (14).

**8.** Outil de fraisage selon l'une au moins des revendications 1 ou 7, caractérisé en ce que la rangée de dents coupantes radiale extérieure (12) présente un nombre de dents coupantes (16) de deux à cinq fois et de préférence quatre fois le nombre des dents coupantes (17) de la rangée de dents coupantes radiale intérieure (14).

**9.** Outil de fraisage selon l'une au moins des revendications précédentes 1, 4 à 8, caractérisé en ce que les arêtes de coupe secondaires (25, 26; 35) sont étagées en segments ayant des angles de direction d'arête ($\kappa$) différents.

**10.** Outil de fraisage selon l'une au moins des revendications précédentes, caractérisé en ce que les arêtes de coupe secondaires (25, 26; 35) présentent une forme d'arche par rapport au plan de travail (32).

**11.** Outil de fraisage selon la revendication 9 ou 10, caractérisé en ce que l'étagement de l'angle de direction d'arête ($\kappa$) est continu ou discontinu.

**12.** Outil de fraisage selon l'une au moins des revendications précédentes, caractérisé en ce que la longueur développée de la longueur de coupe secondaire (25, 26; 35) représente au moins 2,5 fois la surépaisseur de l'usinage.

**13.** Outil de fraisage selon l'une au moins des revendications 1 à 12, caractérisé en ce qu'une première partie d'outil (11) est munie de la rangée de dents coupantes radiale extérieure (12) et qu'une deuxième partie d'outil (13) est munie de la rangée de dents coupantes radiale intérieure (14) et en ce que les deux parties d'outil (11, 13) peuvent être disposées axialement l'une dans l'autre et rendues solidaires en rotation.

**14.** Outil de fraisage selon la revendication 13, caractérisé en ce que la première partie d'outil (11) présente la forme d'une couronne.

**15.** Outil de fraisage selon la revendication 13 ou 14, caractérisé en ce que des évidements (19) sont prévus sur 10 première partie d'outil (11), entre des séries de dents coupantes voisines dans le sens de rotation, pour recevoir une dent coupante (17) de la rangée de dents coupantes radiale intérieure (14) agencée sur la deuxième partie d'outil (13).

**16.** Outil de fraisage selon l'une au moins des revendications précédentes, caractérisé en ce que les dents coupantes (16) de la rangée de dents coupantes radiale extérieure (12) sont munies alternativement d'une arête de coupe principale (23, 24) plus large ou plus étroite et/ou d'une arête de coupe secondaire (25, 26) plus courte ou plus longue.

Fig. 1

Fig. 2A

Fig. 2B

EP 0 883 472 B1

Fig. 3A

Fig. 3B

Fig. 4

14

## Schnittkraft über dem Eingriffswinkel

neue Schneidenform mit verl. Nebenschneide

herkömliche Sägezahngeometrie

Schnittkraft

Eingriffswinkel

Grad

# Fig. 5

# Fig. 6

16'   17'   16'        16'   17'

A        B        40

Fig. 7

11a

40

11b

40

A        11b        B

Fig. 8